# EUROPEAN PATENT APPLICATION

(11) **EP 4 832 576 A1**
(43) Date of publication of application: **28.10.2026**
(21) Application number: 24918129.8
(22) Date of filing: 14.10.2024
(51) Int. Cl.: H04W 36/00

(54) **COMMUNICATION METHOD AND COMMUNICATION APPARATUS**

(30) Priority: 15.01.2024 CN 202410059461
(71) Applicant: Huawei Technologies Co., Ltd., Shenzhen, Guangdong 518129 (CN)
(72) Inventor: WANG, Junfan, Shenzhen, Guangdong 518129 (CN); YAN, Xueqiang, Shenzhen, Guangdong 518129 (CN); XI, Yan, Shenzhen, Guangdong 518129 (CN); ZHAO, Mingyu, Shenzhen, Guangdong 518129 (CN)
(74) Representative: MERH-IP Matias Erny Reichl Hoffmann Patentanwälte PartG mbB
(86) International application number: PCT/CN2024/124671
(87) International publication number: WO 2025/152520

(57) **Abstract**

A communication method and a communication apparatus are provided, and relate to the field of communication technologies. In the method, a first network device sends information about a sensing service between a terminal device and the first network device to a second network device, and the second network device may determine, based on the information, whether continuous execution of the sensing service can be supported. When the second network device determines that the sensing service can be continued, the sensing service originally performed by the terminal device can continue to be executed, thereby supporting continuous execution of the sensing service originally performed by the terminal device.

## Description

This application claims priority to Chinese Patent Application No. 202410059461.X, filed with the China National Intellectual Property Administration on January 15, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Both wireless communication and wireless sensing are based on electromagnetic wave theory. For example, a transmitter modulates electromagnetic wave signals, so that the electromagnetic waves carry source information. During propagation, the electromagnetic wave signals are affected by a wireless environment. To be specific, the electromagnetic wave signals are modulated by the environment, and therefore also carry environment information. By analyzing the electromagnetic wave signals, a receiver can obtain not only the carried source information, but also sensing information that reflects propagation environment characteristics, which makes integrated sensing and communication possible.

Communication systems are evolving toward higher frequency bands, larger bandwidths, and denser distribution of large-scale antenna arrays, so that a single system can integrate a sensing capability and a communication capability, enabling mutual performance enhancement among systems. As a basic feature of the communication systems, sensing enables observation and sampling of the physical world and the biological world, thereby opening a "new pathway" for integrating the physical world and the biological world with the digital world.

In the communication systems, a terminal device and a network device may jointly perform sensing services. For example, the terminal device sends sensing signals to the network device, and the network device performs sensing measurements on the sensing signals and obtains sensing results. When the terminal device needs to be handed over from one network device to another network device, the sensing services originally performed by the terminal device may be interrupted. Therefore, how to support continuous execution of the sensing service originally performed by the terminal device is an urgent technical problem to be resolved currently.

### SUMMARY

This application provides a communication method and a communication apparatus, to support continuous execution of a sensing service originally performed by a terminal device.

According to a first aspect, a communication method is provided, including: sending request information, where the request information is used to request a handover of a terminal device from a first network device to a second network device, and the request information further indicates information about a sensing service between the terminal device and the first network device; and receiving response information, where the response information corresponds to the request information.

The solution in the first aspect may be performed by the first network device, or may be performed by a module (for example, a chip system) in the first network device, or may be performed by a logical node, a logical module, or software that can implement all or some functions of the first network device. This is not limited. For ease of description, the following uses the first network device as an example for description.

In the foregoing solution, the first network device may (indirectly or directly, which is not limited) send the information about the sensing service between the terminal device and the first network device to the second network device, and the second network device may obtain, through information exchange with the first network device, the information about the sensing service originally performed by the terminal device. When the second network device determines that the sensing service can continue to be supported, the sensing service originally performed by the terminal device can continue to be executed.

In this embodiment of this application, the first network device and the second network device exchange the information about the sensing service originally performed by the terminal device, so that a possibility or a probability that the sensing service originally performed by the terminal device can continue to be executed can be increased. In other words, this application provides an interaction mechanism in which the first network device and the second network device exchange the information about the sensing service originally performed by the terminal device. The interaction mechanism may increase the probability or the possibility that the sensing service originally performed by the terminal device can be continued. For example, after obtaining the information about the sensing service originally performed by the terminal device, the second network device may determine whether to support the sensing service. If the sensing service is supported, the sensing service originally performed by the terminal device can be continued or continue to be executed. Correspondingly, the probability that the sensing service originally performed by the terminal device can be continued is increased, thereby supporting continuous execution of the sensing service originally performed by the terminal device.

In the first aspect, the sending the request information may include: sending the request information to the second network device; or sending the request information to a mobility management network element.

When there is a communication interface between the first network device and the second network device, the first network device may directly send the request information to the second network device. This can reduce overhead costs of information exchange between the first network device and the second network device, thereby supporting continuous execution of the sensing service originally performed by the terminal device.

When there is no communication interface between the first network device and the second network device, and the first network device may send the request information to the mobility management network element, the mobility management network element forwards the request information to the second network device. In this way, the first network device may complete information exchange with the second network device via the mobility management network element, thereby supporting continuous execution of the sensing service originally performed by the terminal device.

According to a second aspect, a communication method is provided, including: receiving request information, where the request information is used to request a handover of a terminal device from a first network device to a second network device, and the request information further indicates information about a sensing service between the terminal device and the first network device; and sending response information in response to the request information.

The solution in the second aspect may be performed by the second network device, or may be performed by a module (for example, a chip system) in the second network device, or may be performed by a logical node, a logical module, or software that can implement all or some functions of the second network device. This is not limited. For ease of description, the following uses the second network device as an example for description.

In the foregoing solution, the second network device may obtain, through (indirect or direct, which is not limited) information exchange with the first network device, the information about the sensing service originally performed by the terminal device. When the second network device determines that the sensing service can continue to be supported, the sensing service originally performed by the terminal device can continue to be executed.

In this embodiment of this application, the first network device and the second network device exchange the information about the sensing service originally performed by the terminal device, so that a possibility or a probability that the sensing service originally performed by the terminal device can continue to be executed can be increased. In other words, this application provides an interaction mechanism in which the first network device and the second network device exchange the information about the sensing service originally performed by the terminal device. The interaction mechanism may increase the probability or the possibility that the sensing service originally performed by the terminal device can be continued. For example, after obtaining the information about the sensing service originally performed by the terminal device, the second network device may determine whether to support the sensing service. If the sensing service is supported, the sensing service originally performed by the terminal device can be continued or continue to be executed. Correspondingly, the probability that the sensing service originally performed by the terminal device can be continued is increased, thereby supporting continuous execution of the sensing service originally performed by the terminal device.

In the second aspect, the method further includes: sending handover information to a mobility management network element, where the handover information indicates to hand over the sensing service from the first network device to the second network device.

When determining that continuous execution of the sensing service can be supported, the second network device may indicate, to the mobility management network element, to hand over the sensing service from the first network device to the second network device, and the mobility management network element may complete the handover of the sensing service based on the indication, thereby supporting continuous execution of the sensing service originally performed by the terminal device.

In the second aspect, the handover information includes at least one of the following: the information about the sensing service, identification information of the first network device, identification information of the second network device, or information indicating that the sensing service can be continued.

For example, the handover information includes the information about the sensing service. When the second network device sends the information about the sensing service to the mobility management network element, the mobility management network element may determine, based on the information about the sensing service, that the second network device supports continuous execution of the sensing service, and may further determine that the sensing service needs to be handed over from the first network device to the second network device.

For another example, the handover information includes the identification information of the first network device. When the second network device sends the identification information of the first network device to the mobility management network element, the mobility management network element may determine a sensing service corresponding to an identifier of the first network device based on an association (which may be preconfigured in the mobility management network element) between the identification information of the first network device and the sensing service, determine that the sensing service can continue to be supported by the second network device, and further determine that the sensing service needs to be handed over from the first network device to the second network device.

For example, the handover information includes the identification information of the second network device. When the second network device sends the identification information of the second network device to the mobility management network element, the mobility management network element may determine a sensing service corresponding to an identifier of the second network device based on an association (which may be preconfigured in the mobility management network element) between the identification information of the second network device and the sensing service, determine that the second network device supports continuous execution of the sensing service, and further determine that the sensing service needs to be handed over from the first network device to the second network device.

In the second aspect, the response information indicates that the sensing service can be continued, and the method further includes: sending first information to a sensing service control network element, where the first information indicates that the sensing service changes.

After determining, based on the first information, that the sensing service changes, the sensing service control network element may perform adaptive adjustment on the sensing service. For example, the sensing service control network element may adjust a transmission channel for sensing data of the sensing service, thereby supporting continuous execution of the sensing service originally performed by the terminal device.

In the second aspect, the first information includes at least one of the following: information indicating that a sensing entity of the sensing service changes or information indicating whether the sensing service can be continued.

For example, the first information includes the information indicating that the sensing entity of the sensing service changes. The sensing service control network element may determine that a data channel between a sensing data management network element and the network device needs to be switched. For example, a data channel between the first network device and the sensing data management network element needs to be released, and a data channel between the second network device and the sensing data management network element needs to be established, thereby supporting continuous execution of the sensing service originally performed by the terminal device.

For example, the first information includes the information indicating that the sensing service can be continued. The sensing service control network element may determine, based on the information, that the sensing entity of the sensing service changes, for example, changes from the first network device to the second network device. The sensing service control network element determines that a data channel between a sensing data management network element and the network device needs to be switched. For example, a data channel between the first network device and the sensing data management network element needs to be released, and a data channel between the second network device and the sensing data management network element needs to be established, thereby supporting continuous execution of the sensing service originally performed by the terminal device. In the second aspect, the method further includes: receiving the sensing data of the sensing service from the terminal device; and sending the sensing data of the sensing service to the sensing data management network element.

After the terminal device is handed over from the first network device to the second network device, the terminal device sends the sensing data of the sensing service to the second network device, the second network device sends the sensing data of the sensing service to the sensing data management network element, and the sensing data management network element may process the sensing data of the sensing service, to complete transmission of the sensing data of the sensing service.

In the second aspect, the receiving the request information includes: receiving the request information from the first network device; and the sending the response information includes: sending the response information to the first network device.

When there is a communication interface between the first network device and the second network device, the first network device may directly send the request information to the second network device. This can reduce overhead costs of information exchange between the first network device and the second network device, and enable continuous execution of the sensing service originally performed by the terminal device.

In the second aspect, the receiving the request information includes: receiving the request information from the mobility management network element; and the sending the response information includes: sending the response information to the mobility management network element.

When there is no communication interface between the first network device and the second network device, and the first network device may send the request information to the mobility management network element, the mobility management network element forwards the request information to the second network device. In this way, the first network device may complete information exchange with the second network device via the mobility management network element, thereby supporting continuous execution of the sensing service originally performed by the terminal device.

According to a third aspect, a communication method is provided, including: determining indication information, where the indication information indicates information about a sensing service between a terminal device and a first network device; and sending the indication information to the first network device.

The solution in the third aspect may be performed by the terminal device, or may be performed by a module (for example, a chip system) in the terminal device, or may be performed by a logical node, a logical module, or software that can implement all or some functions of the terminal device. This is not limited. For ease of description, the following uses the terminal device as an example for description.

In the foregoing solution, the terminal device may send, to the first network device, the information indicating the sensing service between the terminal device and the first network device, and the first network device may send the information to a second network device. After obtaining the information about the sensing service originally performed by the terminal device, the second network device may determine whether continuous execution of the sensing service can be supported. When the second network device determines that the sensing service can continue to be supported, the sensing service originally performed by the terminal device can continue to be executed.

The terminal device reports the information about the sensing service originally performed by the terminal device to the first network device, so that the first network device may send, to the second network device in a process of information exchange with the second network device, the information about the sensing service originally performed by the terminal device. This helps the second network device determine whether to support continuous execution of the sensing service. After the second network device obtains the information, a possibility or a probability that the sensing service originally performed by the terminal device can be continued may be increased, thereby supporting continuous execution of the sensing service originally performed by the terminal device.

According to a fourth aspect, a communication method is provided, including: receiving request information from a first network device, where the request information is used to request a handover of a terminal device from the first network device to a second network device, and the request information further indicates information about a sensing service performed between the terminal device and the first network device; sending the request information to the second network device; receiving response information from the second network device, where the response information corresponds to the request information; and sending the response information to the first network device.

The solution in the fourth aspect may be performed by a mobility management network element, or may be performed by a module (for example, a chip system) in the mobility management network element, or may be performed by a logical node, a logical module, or software that can implement all or some functions of the mobility management network element. This is not limited. For ease of description, the following uses the mobility management network element as an example for description.

In the foregoing solution, the mobility management network element may assist the first network device and the second network device in completing exchange of the request information, so that the second network device can obtain the information about the sensing service originally performed by the terminal device. When the second network device determines that the sensing service can continue to be supported, the sensing service originally performed by the terminal device can continue to be executed.

In this embodiment of this application, the first network device and the second network device exchange the information about the sensing service originally performed by the terminal device, so that a possibility or a probability that the sensing service originally performed by the terminal device can continue to be executed can be increased. In other words, this application provides an interaction mechanism in which the first network device and the second network device exchange the information about the sensing service originally performed by the terminal device. The interaction mechanism may increase the probability or the possibility that the sensing service originally performed by the terminal device can be continued. For example, after obtaining the information about the sensing service originally performed by the terminal device, the second network device may determine whether to support the sensing service. If the sensing service is supported, the sensing service originally performed by the terminal device can be continued or continue to be executed. Correspondingly, the probability that the sensing service originally performed by the terminal device can be continued is increased, thereby supporting continuous execution of the sensing service originally performed by the terminal device.

In the fourth aspect, the method further includes: receiving handover information from the second network device, where the handover information indicates to hand over the sensing service from the first network device to the second network device. In the fourth aspect, the handover information includes at least one of the following: the information about the sensing service, identification information of the first network device, identification information of the second network device, or information indicating that the sensing service can be continued. In the fourth aspect, the method further includes: sending first information to a sensing service control network element, where the first information indicates that the sensing service changes. After determining, based on the first information, that the sensing service changes, the sensing service control network element may perform adaptive adjustment on the sensing service. For example, the sensing service control network element may adjust a transmission channel for sensing data of the sensing service, thereby supporting continuous execution of the sensing service originally performed by the terminal device.

In the fourth aspect, the first information includes at least one of the following: information indicating that a sensing entity of the sensing service changes or information indicating whether the sensing service can be continued.

For descriptions of beneficial effects of the fourth aspect, refer to the descriptions of beneficial effects of the second aspect. Details are not described again.

With reference to the method according to any one of the first aspect to the fourth aspect, the information about the sensing service includes at least one of the following: identification information or context information.

For example, the information about the sensing service includes the identification information (for example, may include information such as an identifier of the sensing service or an index for distinguishing between sensing services). The second network device may determine, based on the identification information of the sensing service, the sensing service performed between the terminal device and the first network device.

For example, the information about the sensing service includes the context information. The second network device may determine, based on the context information of the sensing service, specific content of the sensing service performed between the terminal device and the first network device.

With reference to the method according to any one of the first aspect to the fourth aspect, the context information includes at least one of the following: sensing content, a sensing period, or a sensing result requirement.

In this way, the second network device may obtain the specific content of the sensing service by using one or more of the foregoing items.

With reference to the method according to any one of the first aspect to the fourth aspect, the response information indicates whether the sensing service can be continued.

In this way, the first network device may determine, based on the response information, whether the second network device supports continuous execution of the sensing service.

With reference to the method according to any one of the first aspect to the fourth aspect, the response information is related to a sensing capability of the second network device for the sensing service.

The second network device may determine, based on the sensing capability of the second network device for the sensing service, whether continuous execution of the sensing service can be supported, to prevent the second network device from sending an incorrect indication to the first network device, for example, prevent the second network device from indicating, when the second network device cannot perform the sensing service after the sensing service is handed over from the first network device to the second network device, to the first network device that the second network device supports continuous execution of the sensing service. Otherwise, the sensing service originally performed by the terminal device would be interrupted.

According to the foregoing solution, in this embodiment of this application, continuous execution of the sensing service originally performed by the terminal device can be better supported.

According to a fifth aspect, a communication method is provided, including: receiving first information, where the first information indicates information indicating that a sensing service between a terminal device and a first network device changes; and establishing a data channel between a second network device and a sensing data management network element based on the first information, where the second network device is a network device to which the terminal device is handed over from the first network device.

The solution in the fifth aspect may be performed by a sensing service control network element, or may be performed by a module (for example, a chip system) in the sensing service control network element, or may be performed by a logical node, a logical module, or software that can implement all or some functions of the sensing service control network element. This is not limited. For ease of description, the following uses the sensing service control network element as an example for description.

In the foregoing solution, after obtaining the first information, the sensing service control network element determines, based on the first information, that the sensing service is handed over, to be specific, the sensing service is handed over from the first network device to another network device. The sensing service control network element may determine that a data transmission channel between the first network device and the sensing data management network element needs to be released, and a data transmission channel between the second network device and the sensing data management network element needs to be established, thereby supporting continuous execution of the sensing service originally performed by the terminal device.

In the fifth aspect, the first information includes at least one of the following: information indicating that a sensing entity of the sensing service changes or information indicating whether the sensing service can be continued.

For descriptions of beneficial effects of the fifth aspect, refer to the descriptions of beneficial effects of the second aspect. Details are not described again.

According to a sixth aspect, a communication apparatus is provided. The communication apparatus includes: an interface unit, configured to send request information, where the request information is used to request a handover of a terminal device from a first network device to a second network device, and the request information further indicates information about a sensing service between the terminal device and the first network device. The interface unit is further configured to receive response information, where the response information corresponds to the request information.

The communication apparatus may be further configured to perform the solution in the method according to any one of the first aspect and the possible implementations of the first aspect. Details are not described again.

According to a seventh aspect, a communication apparatus is provided. The communication apparatus includes: an interface unit, configured to receive request information, where the request information is used to request a handover of a terminal device from a first network device to a second network device, and the request information further indicates information about a sensing service between the terminal device and the first network device. The interface unit is further configured to send response information in response to the request information.

The communication apparatus may be further configured to perform the solution in the method according to any one of the second aspect and the possible implementations of the second aspect. Details are not described again.

According to an eighth aspect, a communication apparatus is provided. The communication apparatus includes: a processing unit, configured to determine indication information, where the indication information indicates information about a sensing service between a terminal device and a first network device; and an interface unit, configured to send the indication information to the first network device.

The communication apparatus may be further configured to perform the solution in the method according to any one of the third aspect and the possible implementations of the third aspect. Details are not described again.

According to a ninth aspect, a communication apparatus is provided. The communication apparatus includes: an interface unit, configured to receive request information from a first network device, where the request information is used to request a handover of a terminal device from the first network device to a second network device, and the request information further indicates information about a sensing service performed between the terminal device and the first network device. The interface unit is configured to send the request information to the second network device. The interface unit is configured to receive response information from the second network device, where the response information corresponds to the request information. The interface unit is configured to send the response information to the first network device.

The communication apparatus may be further configured to perform the solution in the method according to any one of the fourth aspect and the possible implementations of the fourth aspect. Details are not described again.

According to a tenth aspect, a communication apparatus is provided. The communication apparatus includes: an interface unit, configured to receive first information, where the first information indicates information indicating that a sensing service between a terminal device and a first network device changes; and a processing unit, configured to establish a data channel between a second network device and a sensing data management network element based on the first information, where the second network device is a network device to which the terminal device is handed over from the first network device.

The communication apparatus may be further configured to perform the solution in the method according to any one of the fifth aspect and the possible implementations of the fifth aspect. Details are not described again.

According to an eleventh aspect, a communication apparatus is provided, including a processor. The processor is configured to: cause, by executing a computer program or instructions or by using a logic circuit, the communication apparatus to perform the method according to any one of the first aspect and the possible implementations of the first aspect, the communication apparatus to perform the method according to any one of the second aspect and the possible implementations of the second aspect, the communication apparatus to perform the method according to any one of the third aspect and the possible implementations of the third aspect, the communication apparatus to perform the method according to any one of the fourth aspect and the possible implementations of the fourth aspect, or the communication apparatus to perform the method according to any one of the fifth aspect and the possible implementations of the fifth aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a twelfth aspect, a communication apparatus is provided, including a logic circuit and an input/output interface. The input/output interface is configured to input and/or output a signal. The logic circuit is configured to perform the method according to any one of the first aspect and the possible implementations of the first aspect, the logic circuit is configured to perform the method according to any one of the first aspect and the possible implementations of the first aspect, the logic circuit is configured to perform the method according to any one of the second aspect and the possible implementations of the second aspect, the logic circuit is configured to perform the method according to any one of the third aspect and the possible implementations of the third aspect, the logic circuit is configured to perform the method according to any one of the fourth aspect and the possible implementations of the fourth aspect, or the logic circuit is configured to perform the method according to any one of the fifth aspect and the possible implementations of the fifth aspect.

According to a thirteenth aspect, a computer-readable storage medium is provided. The computer-readable storage medium stores a computer program or instructions. When the computer program or the instructions are run on a computer, the method according to any one of the first aspect and the possible implementations of the first aspect is performed, the method according to any one of the second aspect and the possible implementations of the second aspect is performed, the method according to any one of the third aspect and the possible implementations of the third aspect is performed, the method according to any one of the fourth aspect and the possible implementations of the fourth aspect is performed, or the method according to any one of the fifth aspect and the possible implementations of the fifth aspect is performed.

According to a fourteenth aspect, a computer program product is provided, including instructions. When the instructions are run on a computer, the method according to any one of the first aspect and the possible implementations of the first aspect is performed, the method according to any one of the second aspect and the possible implementations of the second aspect is performed, the method according to any one of the third aspect and the possible implementations of the third aspect is performed, the method according to any one of the fourth aspect and the possible implementations of the fourth aspect is performed, or the method according to any one of the fifth aspect and the possible implementations of the fifth aspect is performed.

According to a fifteenth aspect, a chip system is provided. The chip is connected to a memory. The chip is configured to read and execute a software program stored in the memory, to perform the method according to any one of the first aspect and the possible implementations of the first aspect, perform the method according to any one of the second aspect and the possible implementations of the second aspect, perform the method according to any one of the third aspect and the possible implementations of the third aspect, perform the method according to any one of the fourth aspect and the possible implementations of the fourth aspect, or perform the method according to any one of the fifth aspect and the possible implementations of the fifth aspect.

According to a sixteenth aspect, a chip system is provided. The chip system includes a communication interface, configured to communicate with another apparatus; and a processor, configured to: cause a communication device in which the chip system is installed to perform the method according to any one of the first aspect and the possible implementations of the first aspect, cause the communication device in which the chip system is installed to perform the method according to any one of the second aspect and the possible implementations of the second aspect, cause the communication device in which the chip system is installed to perform the method according to any one of the third aspect and the possible implementations of the third aspect, cause the communication device in which the chip system is installed to perform the method according to any one of the fourth aspect and the possible implementations of the fourth aspect, or cause the communication device in which the chip system is installed to perform the method according to any one of the fifth aspect and the possible implementations of the fifth aspect.

According to a seventeenth aspect, a chip system is provided. The chip system includes a processor, a memory, and an input/output port. The memory is configured to store a computer program. The processor is configured to execute the computer program stored in the memory, to cause the processor to perform the method according to any one of the first aspect and the possible implementations of the first aspect, cause the processor to perform the method according to any one of the second aspect and the possible implementations of the second aspect, cause the processor to perform the method according to any one of the third aspect and the possible implementations of the third aspect, cause the processor to perform the method according to any one of the fourth aspect and the possible implementations of the fourth aspect, or cause the processor to perform the method according to any one of the fifth aspect and the possible implementations of the fifth aspect.

According to an eighteenth aspect, a chip system is provided. The chip system is used in an electronic device. The chip system includes one or more processors. The processor is configured to invoke computer instructions, to cause the electronic device to perform the method according to any one of the first aspect and the possible implementations of the first aspect, cause the electronic device to perform the method according to any one of the second aspect and the possible implementations of the second aspect, cause the electronic device to perform the method according to any one of the third aspect and the possible implementations of the third aspect, cause the electronic device to perform the method according to any one of the fourth aspect and the possible implementations of the fourth aspect, or cause the electronic device to perform the method according to any one of the fifth aspect and the possible implementations of the fifth aspect.

For descriptions of beneficial effects of any one of the sixth aspect to the eighteenth aspect, refer to the descriptions of the beneficial effects of the first aspect to the fifth aspect.

### BRIEF DESCRIPTION OF DRAWINGS

FIG. 1 is a diagram of a communication system to which an embodiment of this application is applicable;
FIG. 2a to FIG. 2f are diagrams of sensing scenarios according to an embodiment of this application;
FIG. 3 is a diagram of a network architecture to which an embodiment of this application is applicable;
FIG. 4 is a diagram of an application scenario according to an embodiment of this application;
FIG. 5 is a schematic interaction flowchart of a communication method according to an embodiment of this application;
FIG. 6 is a schematic interaction flowchart of another communication method according to an embodiment of this application;
FIG. 7 is a schematic interaction flowchart of still another communication method according to an embodiment of this application;
FIG. 8 is a schematic interaction flowchart of yet another communication method according to an embodiment of this application;
FIG. 9 is a block diagram of a communication apparatus according to an embodiment of this application; and
FIG. 10 is a block diagram of another communication apparatus according to an embodiment of this application.

### DESCRIPTION OF EMBODIMENTS

The following describes technical solutions of this application with reference to the accompanying drawings.

For ease of understanding of embodiments of this application, the following several descriptions are provided first.
1. In embodiments of this application, unless otherwise specified, "a plurality of" or "at least two" means two or more.
2. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in embodiments of this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design scheme described as an "example" or "for example" in embodiments of this application should not be explained as being more preferred or having more advantages than another embodiment or design scheme. Specifically, use of the terms such as "example" or "for example" is intended to present a related concept in a specific manner for ease of understanding.
4. The terms "include", "have", and any variants thereof are intended to cover a nonexclusive inclusion. For example, a process, method, system, product, or device that includes a series of steps or units is not necessarily limited to those expressly listed steps or units, but may include other steps or units not expressly listed or inherent to such a process, method, product, or device.
5. In embodiments of this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, to reduce enabling overheads to some extent. In addition, a common part of all information may be identified and enabled in a unified manner, to reduce enabling overheads caused by enabling the same information separately.
6. In embodiments of this application, "preconfigure" may include "predefine", for example, define in a protocol. The "predefine" may be implemented by prestoring, in a device (for example, including network elements), corresponding code, a corresponding table, or other related information that may be used for indication. A specific implementation thereof is not limited in this application.
7. In embodiments of this application, "store" or "save" may be storing in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited.
8. A "protocol" in embodiments of this application may be a standard protocol in the communication field, for example, may include a 4th generation (4th generation, 4G) network, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited in this application.
9. Arrows or blocks shown by dashed lines in diagrams of the accompanying drawings in this specification of this application indicate optional steps or optional modules.
10. In embodiments of this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.
11. In embodiments of this application, an indication includes a direct indication (also referred to as an explicit indication) and an implicit indication. Directly indicating information A means including the information A. Implicitly indicating the information A means indicating the information A by using a correspondence between the information A and information B and by directly indicating the information B. The correspondence between the information A and the information B may be predefined, prestored, pre-burned, or preconfigured.
12. In embodiments of this application, that information C is used to determine information D includes that the information D is determined only based on the information C, and also includes that the information D is determined based on the information C and other information. In addition, that the information C is used to determine the information D may further include an indirect determining case, for example, a case in which the information D is determined based on information E, and the information E is determined based on the information C.
13. In embodiments of this application, that "an apparatus A sends information A to an apparatus B" may be understood as that a destination end of the information A or an intermediate network element in a transmission path between the apparatus A and the destination end is the apparatus B, and may include directly or indirectly sending information to the apparatus B.
14. In embodiments of this application, that "the apparatus B receives the information A from the apparatus A" may be understood as that a source end of the information A or an intermediate network element in a transmission path between the apparatus B and the source end is the apparatus A, and may include directly or indirectly receiving information from the apparatus A. Information may undergo necessary processing, for example, a format change, between a source end for sending the information and a destination end. However, the destination end may understand valid information from the source end. Similar descriptions in this application may be understood similarly. Details are not described herein.

First, a communication system to which an embodiment of this application is applicable is described.

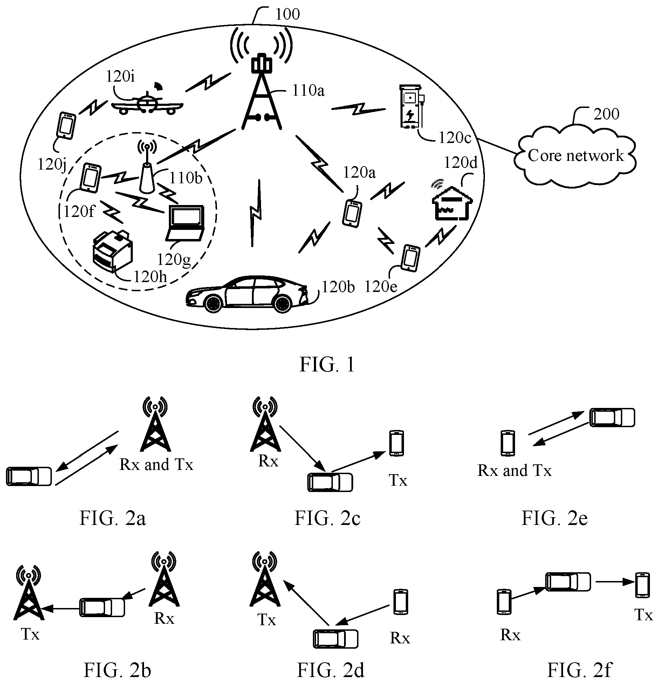

FIG. 1 is a diagram of a communication system to which an embodiment of this application is applicable. As shown in FIG. 1, the communication system includes a radio access network (radio access network, RAN) 100 and a core network (core network, CN) 200. The RAN 100 includes at least one RAN node (for example, 110a and 110b, which are collectively referred to as 110) and at least one terminal device (for example, 120a to 120j, which are collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the CN 200 in a wireless or wired manner. A core network device in the CN 200 and the RAN node 110 in the RAN 100 may be different physical devices, or may be a same physical device that integrates a CN logical function and a RAN logical function.

The RAN 100 may be a cellular system related to the 3rd generation partnership project (the 3rd generation partnership project, 3GPP), for example, a 4G mobile communication system, a 5G mobile communication system, or a future-oriented evolved system (for example, a 6G mobile communication system). Alternatively, the RAN 100 may be an open radio access network (open radio access network, O-RAN or ORAN), a cloud radio access network (cloud radio access network, C-RAN), or a wireless fidelity (wireless fidelity, Wi-Fi) system. Alternatively, the RAN 100 may be a communication system that integrates two or more of the foregoing systems.

The RAN node 110 may also be sometimes referred to as an access network device, a RAN entity, an access node, or the like, and is configured to help the terminal device implement radio access. A plurality of RAN nodes 110 in the communication system may be nodes of a same type, or may be nodes of different types. In some scenarios, roles of the RAN node 110 and the terminal device 120 are relative. For example, the network element 120i may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. Both the RAN node 110 and the terminal 120 are sometimes referred to as communication apparatuses. For example, the network elements 110a and 110b may be understood as communication apparatuses having a base station function, and the network elements 120a to 120j may be understood as communication apparatuses having a terminal function.

In a possible scenario, the RAN node may be a base station (base station, BS), an evolved NodeB (evolved NodeB, eNB), an access point (access point, AP), a transmitting and receiving point (transmitting and receiving point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor base station (for example, 110b in FIG. 1), a relay node or a donor node, or a radio controller in a CRAN scenario.

Optionally, the RAN node may alternatively be a server, a wearable device, a vehicle, a vehicle-mounted device, or the like. All or some functions of the RAN node in this application may alternatively be implemented by using a software function running on hardware, or may be implemented by using a virtualization function instantiated on a platform (for example, a cloud platform). The RAN node in this application may alternatively be a logical node, a logical module, or software that can implement all or some functions of the RAN node.

In another possible scenario, a plurality of RAN nodes coordinate to assist the terminal device in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different communication systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A quantity of devices in the foregoing communication system is merely used as an example, and is not limited thereto. In actual application, the communication system may further include more terminal devices and more RAN devices, and may further include another device.

The terminal device in embodiments of this application may be a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus.

In embodiments of this application, the terminal device may alternatively be a satellite phone, a cellular phone, a smartphone, a wireless data card, a wireless modem, a machine-type communication device, cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a compute device or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited.

In embodiments of this application, the terminal device may alternatively be a device having a communication function in a 6G communication system. A form, a type, or the like of the terminal device in the 6G communication system and another future communication system is not limited.

In embodiments of this application, a communication apparatus configured to implement a function of the terminal device may be a terminal device, or may be an apparatus that can support the terminal device in implementing the function, for example, a chip system. The apparatus may be mounted in the terminal device or used together with the terminal device. In this application, the chip system may include a chip, or may include a chip and another discrete device.

In embodiments of this application, a network device is a device having a wireless transceiver function, and is configured to communicate with the terminal device. The network device may be a node in a RAN, may also be referred to as a base station, or may also be referred to as a RAN node. The network device may be an eNB in long term evolution (long term evolution, LTE), a base station in a 5G network like a gNB, a base station in a public land mobile network (public land mobile network, PLMN) evolved after 5G, a broadband network gateway (broadband network gateway, BNG), an aggregation switch, a network device in the 3GPP, or the like.

The network device may further include base stations in various forms, for example, a macro base station, a micro base station (also referred to as a small cell), a relay station, a TRP, a transmitting point (transmitting point, TP), a mobile switching center, a device that functions as a base station in device-to-device (device-to-device, D2D), vehicle-to-everything (vehicle-to-everything, V2X), and machine-to-machine (machine-to-machine, M2M) communication, and a network device in a non-terrestrial network (non-terrestrial network, NTN). This is not specifically limited.

In embodiments of this application, a communication apparatus configured to implement a function of the network device may be a network device, or may be an apparatus that can support the network device in implementing the function, for example, a chip system. The apparatus may be mounted in the network device or used together with the network device. In embodiments of this application, the chip system may include a chip, or may include a chip and another discrete device.

The network architectures and service scenarios that are described in this application are intended to describe the technical solutions in embodiments of this application more clearly, but do not constitute a limitation on the technical solutions provided in this application. A person of ordinary skill in the art may learn that, with evolution of a communication network architecture and emergence of a new service scenario, the technical solutions provided in this application are also applicable to similar technical problems. For example, this application is applicable to a V2X scenario.

For ease of understanding of embodiments of this application, the following first briefly describes terms in embodiments of this application.

### 1. Definition of sensing

Wireless sensing means sensing by using a wireless signal. Sensing is a process of collecting and processing collected data, and generating a sensing result. For example, a distance, a shape, a type, and the like of a surrounding obstacle are determined based on the collected data. For another example, a breathing frequency, heartbeats, and the like of a monitored object are determined based on the collected data. The collected data may be data collected via a sensor, or may be data collected via a wireless signal.

Both wireless sensing and wireless communication are based on an electromagnetic wave theory. A transmitter modulates electromagnetic wave signals, so that the electromagnetic wave signals carry source information. During propagation, the electromagnetic wave signals are affected by a wireless environment. To be specific, the electromagnetic wave signals are affected by the environment, and therefore can also carry environment information. By analyzing the electromagnetic wave signals, a receiver can not only obtain the carried source information, but also extract sensing information that reflects propagation environment characteristics. In other words, the electromagnetic wave signal has inherent communication and sensing capabilities, which makes integrated sensing and communication (integrated sensing and communication, ISAC) possible. Integrated sensing and communication may also be referred to as joint communication and sensing (joint communication and sensing, JCAS). Integrated sensing and communication may also be referred to as sensing-communication integration for short. Compared with a system in which sensing and communication are separated, ISAC has a series of advantages, for example, reducing costs, reducing a device size, reducing power consumption, improving frequency efficiency, and reducing mutual interference between communication and sensing.

### 2. Sensing scenario

The sensing scenario may be classified into a sensing scenario based on a network device, a sensing scenario based on a network device and a terminal device, and a sensing scenario based on a terminal device. For example, refer to sensing scenarios shown in FIG. 2a to FIG. 2f.

FIG. 2a to FIG. 2f are diagrams of sensing scenarios according to an embodiment of this application. Examples are as follows:

A sensing scenario shown in FIG. 2a is a sensing scenario based on a network device, and the network device serves as a transmitter and a receiver of a sensing signal. For example, a sensing signal 1 sent by the network device arrives at a target object (for example, a vehicle), and the sensing signal 1 is reflected by the target object. The network device may receive a sensing signal 2, and then may process the sensing signal 2 to obtain a sensing result.

A sensing scenario shown in FIG. 2b is also a sensing scenario based on network devices. One network device serves as a transmitter of a sensing signal, and the other network device serves as a receiver of a sensing signal. For example, a sensing signal 1 sent by a network device A arrives at a target object, and the sensing signal 1 is reflected by the target object. A network device B may receive a sensing signal 2, and then the network device B may process the sensing signal 2 to obtain a sensing result.

A sensing scenario shown in FIG. 2c is a sensing scenario based on a network device and a terminal device. The network device serves as a transmitter of a sensing signal, and the terminal device serves as a receiver of a sensing signal. For example, a sensing signal 1 sent by the network device arrives at a target object, and the sensing signal 1 is reflected by the target object. The terminal device may receive a sensing signal 2, and then the terminal device may process the sensing signal 2 to obtain a sensing result.

A sensing scenario shown in FIG. 2d is also a sensing scenario based on a network device and a terminal device. The terminal device serves as a transmitter of a sensing signal, and the network device serves as a receiver of a sensing signal. For example, a sensing signal 1 sent by the terminal device arrives at a target object, and the sensing signal 1 is reflected by the target object. The network device may receive a sensing signal 2, and then the network device may process the sensing signal 2 to obtain a sensing result.

A sensing scenario shown in FIG. 2e is a sensing scenario based on a terminal device, and the terminal device serves as a transmitter and a receiver of a sensing signal. For example, a sensing signal 1 sent by the terminal device arrives at a target object, and the sensing signal 1 is reflected by the target object. The terminal device may receive a sensing signal 2, and then may process the sensing signal 2 to obtain a sensing result.

A sensing scenario shown in FIG. 2f is also a sensing scenario based on terminal devices. One terminal device serves as a transmitter of a sensing signal, and the other terminal device serves as a receiver of a sensing signal. For example, a sensing signal 1 sent by a terminal device a arrives at a target object, and the sensing signal 1 is reflected by the target object. A terminal device b may receive a sensing signal 2, and then the terminal device b may process the sensing signal 2 to obtain a sensing result.

The sensing signal 2 may be understood as a reflected signal of the sensing signal 1, and the sensing signal 2 carries more information than the sensing signal 1. For example, the sensing signal 2 may carry source information and environment information.

### 3. Sensing entity (sensing entity, SE)

The sensing entity may send and/or receive a sensing signal, and may further send a sensing capability to a sensing control entity or an access management entity. In embodiments of this application, the sensing capability may include one or more of the following capabilities.
(1) A layer 1 (layer 1, L1) sensing capability is used to sense raw data. The raw data is basic information of a sensing signal, for example, one or more of an amplitude, a phase, and whether the sensing signal is an I signal or a Q signal.
(2) A layer 2 (layer 2, L2) sensing capability is used to sense measurement data. The measurement data is data that is obtained by processing raw data and that is used to represent a measurement dimension, and may include but is not limited to one or more of a delay of a sampling point, a receiving angle of a sensing signal, signal strength of a sensing signal, Doppler (namely, an offset of a frequency of a sensing signal), a location of a target object, and a speed of the target object. Sampling points are signal values that are at some specific moments or locations and that are selected when discretization processing is performed on continuous signals in a signal processing process.
(3) A layer 3 (layer 3, L3) sensing capability is used to process sensing data to obtain a sensing result. The sensing data may be raw data and/or measurement data, and the sensing result may include but is not limited to one or more of a distance between a sensing entity and a target object, a speed of the target object, a location of the target object, an angle between the sensing entity and the target object, a movement path of the target object, a breathing frequency of the target object, and heartbeats of the target object.

The sensing entity is a logical entity, and may also be referred to as a logical sensing entity. The sensing entity may be deployed on a network device or a terminal device. In other words, a network device or a terminal device having a sensing capability may be used as a sensing entity, and the sensing entity may be a network device or a terminal device having a sensing capability. The network device or the terminal device may have the foregoing three capabilities, or may have one capability or several capabilities. For example, some terminal devices with weak computational power have the L1 sensing capability, but do not have the L2 sensing capability or the L3 sensing capability. For another example, some network devices have the foregoing three capabilities. The sensing entity may alternatively be deployed independently.

The sensing entity may also include a sensing control entity and a sensing processing entity. The sensing control entity may be configured to implement a control plane function of a sensing service, for example, configured to receive sensing capability information of the sensing entity, and orchestrate the sensing service based on the sensing capability information of the sensing entity. The sensing processing entity may be configured to implement a data plane function of the sensing service, for example, configured to process sensing data of the sensing service, to obtain a sensing result of the sensing service. After the control plane function of the sensing service and the data plane function of the sensing service are deployed independently, a quantity of control plane functional entities and a quantity of data plane functional entities may be flexibly configured and adjusted based on a resource and a service status. Then, attacks on the data plane do not affect the control plane, and vice versa. This improves reliability and security of the sensing service.

Orchestrating the sensing service may include selecting a sending sensing entity and a receiving sensing entity, and the sending sensing entity and the receiving sensing entity may be a same sensing entity. The sending sensing entity is a transmitter of a sensing signal, and is configured to send a sensing signal. The receiving sensing entity is a receiver of a sensing signal, and is configured to receive a sensing signal.

Processing the sensing data may include processing raw data to obtain measurement data, and/or processing measurement data to obtain a sensing result. The measurement data may be obtained by processing the raw data, or may be obtained through sensing by the sensing entity.

The two names, the sensing control entity and the sensing processing entity, are used as examples, constituting no limitation on embodiments of this application. With development of communication technologies and sensing technologies, the two modules may use other names. For example, the sensing control entity may also be described as a sensing service control function (sensing service control function, SSCF) network element, a sensing service control network element, or a sensing control network element; and the sensing processing entity may also be described as a sensing data process function (sensing data process function, SDPF) network element, a sensing data process network element, a sensing process network element, a sensing data function network element, or a data function network element. For ease of description, in the following embodiments, the sensing control entity is described as the SSCF, and the sensing processing entity is described as the SDPF.

In embodiments of this application, an example in which the SSCF and the SDPF are introduced into a core network architecture of a 5G system is used, to better be compatible with the 5G system, so that the 5G system can be smoothly evolved to a 6G system. The SSCF may be coupled to an SBI bus through a service-based interface (service-based interface, SBI) to communicate with another core network functional module. The SDPF may be coupled to the SBI bus via the SBI to communicate with another core network functional module, or may communicate with another core network functional module through a separate interface, for example, communicate with another SDPF through a separate interface, or communicate with the SSCF through a separate interface.

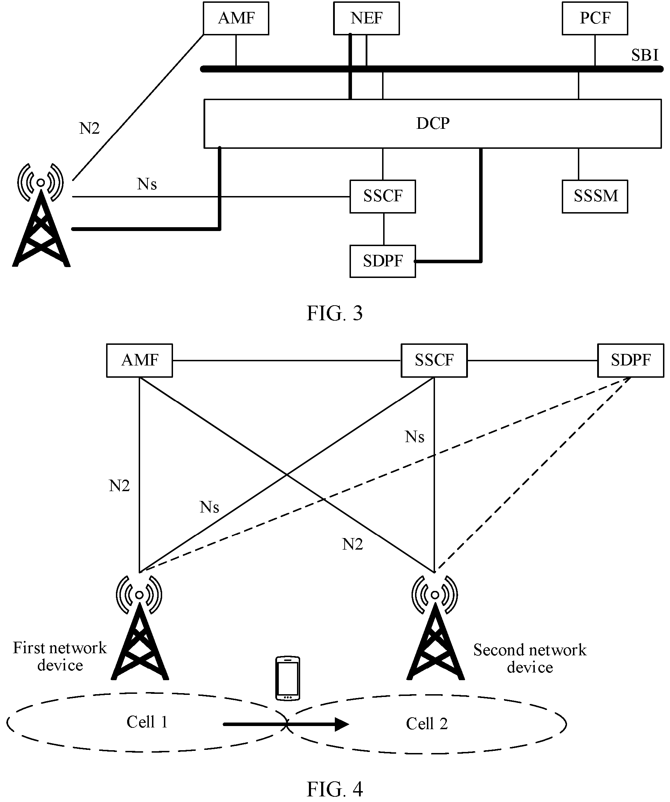

For a network architecture after the SSCF and the SDPF are introduced, refer to FIG. 3.

FIG. 3 is a diagram of a network architecture to which an embodiment of this application is applicable. As shown in FIG. 3, for example, the network architecture includes:
an access and mobility management function (access and mobility management function, AMF) network element, a network exposure function (network element function, NEF) network element, a policy control function (policy control function, PCF) network element, and another similar network element, which may be connected to an SBI bus via an SBI. In other words, the AMF network element, NEF network element, PCF network element, and another similar network element may perform signaling exchange via the SBI bus.

A RAN node may be connected to an SSCF through the AMF network element, or may be directly connected to the SSCF.

An SDPF is coupled to the SBI bus through the SSCF.

A sensing service subscriber management (sensing service subscriber management, SSSM) network element is coupled to the SBI bus via the SBI. The SSSM is configured to be responsible for managing sensing service subscribers, and may be responsible for one or more of the following:
- registration and deregistration of the sensing service subscribers;
- subscription to sensing services;
- authentication and authorization of the sensing service subscribers; and
- account balance management of the sensing service subscribers.

In the network architecture shown in FIG. 3, a RAN may perform transmission of sensing data via a data communication proxy (data communication proxy, DCP), and the SDPF may obtain the sensing data via the DCP. For example, the RAN publishes the sensing data to the DCP in a form of a topic (topic), and the SDPF obtains the sensing data from the DCP based on the topic.

In the network architecture shown in FIG. 3, the SSCF and the AMF may communicate with each other via the SBI, the SSCF and the SDPF may communicate with each other via a dedicated interface, and the SSCF and the RAN may indirectly communicate with each other via the AMF (for example, an N2 interface), or may directly communicate with each other via an Ns interface.

In conclusion, the RAN may directly perform control plane communication with the SSCF, or perform control plane communication with the SSCF via the AMF (for example, perform transmission of control plane messages, for example, control messages). The SDPF may be coupled to or not coupled to the SBI bus. The RAN may directly perform data plane communication with the SDPF (for example, perform transmission of sensing data and/or sensing results).

Based on the network architecture shown in FIG. 3, the SSCF and the SDPF may be independently upgraded and maintained without affecting each other, so that a core network functional entity can be flexibly deployed and managed in a network. In addition, in FIG. 3, one SSCF and one SDPF are used as an example, constituting no limitation on embodiments of this application. For example, a quantity of SDPFs may be increased or decreased based on actual requirements. Even if the quantity of SDPFs is decreased, the SSCF is not affected. In this way, the network can be easily expanded or simplified.

Through introduction of the SSCF and the SDPF, a control plane of a sensing service can be separated from a data plane of the sensing service, and therefore, attackers cannot attack a control plane entity (for example, the SSCF) via a data plane entity (for example, the SDPF). This helps improve network security. Through the separation of the control plane and the data plane of the sensing service, the control plane entity can respond to a request of the data plane entity more quickly, thereby reducing a network delay and improving a network response speed.

The following describes an application scenario of embodiments of this application with reference to FIG. 4.

FIG. 4 is a diagram of an application scenario according to an embodiment of this application. As shown in FIG. 4, a terminal device needs to be handed over from a cell 1 to a cell 2. The cell 1 belongs to a first network device, and the cell 2 belongs to a second network device. The first network device and the second network device may be connected to an SSCF and/or an SDPF based on the network architecture shown in FIG. 3. For details, refer to the descriptions in FIG. 3.

As a sensing entity, the terminal device may jointly perform a sensing service with the first network device (refer to the descriptions of FIG. 2c and FIG. 2d). When the terminal device is handed over from the first network device to the second network device, for example, the terminal device is handed over from the cell 1 to the cell 2, the sensing service originally performed by the terminal device may be interrupted.

In view of this, this application provides a communication method and a communication apparatus, to support continuous execution of the sensing service originally performed by the terminal device.

The following describes the communication method in embodiments of this application with reference to the accompanying drawings.

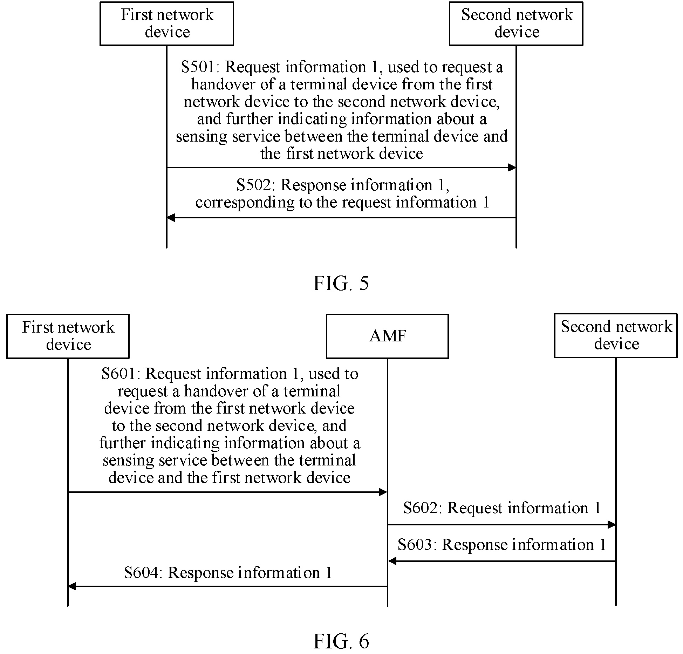

FIG. 5 is a schematic interaction flowchart of a communication method according to an embodiment of this application. The method shown in FIG. 5 may be performed by a first network device and a second network device, or may be performed by a module and/or a component (for example, a chip or an integrated circuit) that are/is installed in the first network device and the second network device and that have/has a corresponding function. The following uses the first network device and the second network device as an example for description. As shown in FIG. 5, the method includes the following steps.

S501: The first network device sends request information 1 to the second network device.

Correspondingly, the second network device receives the request information 1.

In a possible implementation, the first network device may directly send the request information 1 to the second network device.

When there is a communication interface between the first network device and the second network device, the first network device may directly send the request information 1 to the second network device. This can reduce overhead costs of information exchange between the first network device and the second network device, thereby supporting continuous execution of a sensing service originally performed by a terminal device.

In a possible implementation, the first network device may directly send the request information 1 to a mobility management network element, and the mobility management network element sends the request information 1 to the second network device.

When there is no communication interface between the first network device and the second network device, and the first network device may send the request information 1 to the mobility management network element, the mobility management network element forwards the request information 1 to the second network device. In this way, the first network device may complete information exchange with the second network device via the mobility management network element, thereby supporting continuous execution of the sensing service originally performed by the terminal device.

The request information 1 is used to request a handover of the terminal device from the first network device to the second network device. The request information 1 may further indicate information about the sensing service between the terminal device and the first network device. The sensing service may be one or more of a speed sensing service, a positioning sensing service, a measurement sensing service, or the like. A specific service form of the sensing service is not limited.

In a possible implementation, the sensing service may be understood as the information about the sensing service originally performed by the terminal device. The sensing service needs to be jointly completed by the terminal device and the first network device now or in the future. In other words, the sensing service may be understood as a sensing service that needs to be jointly completed by the terminal device and the first network device.

For example, the sensing service originally performed by the terminal device may be a sensing service that is being performed between the terminal device and the first network device.

For example, before or when the first network device sends the request information 1 to the second network device, the sensing service is being performed between the terminal device and the first network device.

For example, the sensing service originally performed by the terminal device may be a sensing service periodically performed between the terminal device and the first network device.

For example, the terminal device sends a sensing signal 1 to the first network device at 8:00, and the first network device receives the sensing signal 1 and performs a sensing measurement on the sensing signal 1. The terminal device sends a sensing signal 2 to the terminal device at 8:20, and the first network device receives the sensing signal 2 and performs a sensing measurement on the sensing signal 2. The terminal device sends a sensing signal 3 to the first network device at 8:40, and the first network device receives the sensing signal 3 and performs a sensing measurement on the sensing signal 3. That is, the terminal device may send a sensing signal to the first network device at an interval of 20 minutes. Sending and receiving of the sensing signal 1, the sensing signal 2, and the sensing signal 3 may be understood as the sensing service jointly performed by the terminal device and the first network device. The sensing service requires the terminal device to periodically send a sensing signal to the first network device, and the first network device needs to periodically receive the sensing signal.

For example, the sensing service originally performed by the terminal device is a sensing service that the terminal device and the first network device agree to perform.

For example, the terminal device and the first network device need to jointly perform the sensing service at a specified time point. For example, the specified time point is 10:00. The first network device may send the request information 1 to the second network device before the time point or at the time point. This is not limited herein.

In conclusion, the first network device may send, to the second network device, the information indicating the sensing service. The sensing service is a service that needs to be jointly completed by the terminal device and the first network device. That the terminal device and the first network device need to jointly complete the sensing service may be understood as follows: The terminal device and the first network device need to perform the sensing service now, or the terminal device and the first network device need to complete the sensing service at a specified time point (the specified time point may be later than a sending time point or a receiving time point of the request information 1, or the specified time point and the sending time point or the receiving time point of the request information 1 may be a same time point). That is, a completion time point or a processing time point of the sensing service is not strictly limited in this embodiment of this application.

In a possible implementation, the information about the sensing service may be determined by the terminal device. For example, the terminal device may determine information related to the sensing service that the terminal device needs to continue, and report the information related to the sensing service to the first network device. For example, the terminal device sends indication information to the first network device, where the indication information indicates the information about the sensing service between the terminal device and the first network device. Correspondingly, the first network device may receive the indication information, obtain the information about the sensing service between the terminal device and the first network device based on the indication information, and send the information to the second network device.

Specifically, the terminal device may send, to the first network device, the information indicating the sensing service between the terminal device and the first network device, and the first network device may send the information to the second network device. After obtaining the information about the sensing service originally performed by the terminal device, the second network device determines whether to support continuous execution of the sensing service. When the second network device determines that the sensing service continues to be supported, the sensing service originally performed by the terminal device can continue to be executed.

The terminal device reports the information about the sensing service originally performed by the terminal device to the first network device, so that the first network device may send, to the second network device in a process of information exchange with the second network device, the information about the sensing service originally performed by the terminal device. This helps the second network device determine whether to support continuous execution of the sensing service. After the second network device obtains the information, a possibility or a probability that the sensing service originally performed by the terminal device can be continued may be increased, thereby supporting continuous execution of the sensing service originally performed by the terminal device.

In a possible implementation, the information about the sensing service may include at least one of the following:
identification information or context information.

For example, the information about the sensing service includes the identification information (for example, may include information such as an identifier of the sensing service or an index for distinguishing between sensing services). The second network device may determine, based on the identification information of the sensing service, the sensing service performed between the terminal device and the first network device.

For example, the information about the sensing service includes the context information. The second network device may determine, based on the context information of the sensing service, specific content of the sensing service between the terminal device and the first network device.

For example, the information about the sensing service may include the identification information and the context information. The second network device may determine, based on the identification information and the context information of the sensing service, the sensing service performed between the terminal device and the first network device and specific content of the sensing service.

In a possible implementation, the identification information of the sensing service may be associated with the context information of the sensing service. Refer to Table 1. Content shown in Table 1 is merely used as an example, and is not used as a final limitation.

**Table 1**

| Identifier of the sensing service | Context of the sensing service |
|---|---|
| Identifier 1 | Context 1 |
| Identifier 2 | Context 2 |

As shown in Table 1:
- The identifier of the sensing service is the identifier 1, which is associated with the context 1; or
- the identifier of the sensing service is the identifier 2, which is associated with the context 2.

In this case, an association relationship between the identifier of the sensing service and the context of the sensing service is established, and the association relationship is preconfigured, so that the second network device may determine the associated context information of the sensing service based on the identifier of the sensing service, or the second network device may determine the associated identification information of the sensing service based on the context information of the sensing service.

In a possible implementation, the context information of the sensing service may include at least one of the following:
sensing content, a sensing period, or a sensing result requirement.

For example, the context information of the sensing service includes the sensing content (for example, sensing of an ambient environment and environment reconstruction). The second network device may obtain the sensing content of the sensing service between the terminal device and the first network device based on the context information of the sensing service.

For example, the context information of the sensing service includes the sensing period (for example, a time interval at which a sensing signal sending entity sends a sensing signal, for example, the sensing signal sending entity sends the sensing signal at a specific interval). The second network device may obtain the sensing period of the sensing service between the terminal device and the first network device based on the context information of the sensing service.

For example, the context information of the sensing service includes the sensing result requirement (for example, accuracy, speed accuracy, a maximum delay, a refresh rate, and a false alarm rate). The second network device may obtain the sensing result requirement (or a term, for example, a key performance indicator (key performance indicator, KPI)) of the sensing service between the terminal device and the first network device based on the context information of the sensing service. For example, the sensing result requirement may include information such as sensing accuracy or a sensing error.

In a possible implementation, the context information of the sensing service may further include a topic corresponding to sensing data of the sensing service. In this way, the second network device may obtain the sensing data of the sensing service based on the topic.

It should be noted that the sensing content, the sensing period, or the sensing result requirement may also be collectively referred to as the context information. In other words, the information about the sensing service may include one or more of the identification information, the sensing content, the sensing period, or the sensing result requirement.

S502: The second network device sends response information 1 to the first network device.

Correspondingly, the first network device receives the response information 1. The second network device may directly send the response information 1 to the first network device, or may indirectly send the response information 1 to the first network device (refer to descriptions in FIG. 6). This is not limited.

The response information 1 corresponds to the request information 1. In other words, the response information 1 is used to respond to the request information 1, or the response information 1 is a form of response of the second network device to the request information 1. The second network device may alternatively provide a response to the request information 1 to the first network device in another manner, in other words, the first network device receives a response to the request information 1. For example, the first network device receives the response information 1.

In a possible implementation, the response information 1 may be used to respond to handing over, indicated by the request information 1, the terminal device from the first network device to the second network device, for example, allowing handing over the terminal device from the first network device to the second network device, or not allowing handing over the terminal device from the first network device to the second network device. The response information 1 may be alternatively used to respond to the information, indicated by the request information 1, about the sensing service performed between the terminal device and the first network device, for example, indicating that the second network device supports continuous execution of the sensing service, or indicating that the second network device does not support continuous execution of the sensing service. When the response information 1 is used to respond to both handing over the terminal device from the first network device to the second network device and the information about the sensing service performed between the terminal device and the first network device, the response information 1 may include a new parameter. The new parameter is used to respond to the information about the sensing service performed between the terminal device and the first network device. For example, the new parameter may be a sensing continuity identifier (sensing continuity identifier), which indicates whether the sensing service can be continued.

For example, when a value of the sensing continuity identifier is 1, it indicates that the second network device supports continuous execution of the sensing service; or when the value of the sensing continuity identifier is 0, it indicates that the second network device does not support continuous execution of the sensing service.

In another possible implementation, the response information 1 may indicate only whether the sensing service can be continued. In this way, the first network device may determine, based on the response information 1, whether the second network device supports continuous execution of the sensing service.

In this embodiment of this application, in a possible implementation, the request information 1 may be further used to request a handover of the sensing service from the first network device to the second network device. When the request information 1 is used to request the handover of the sensing service from the first network device to the second network device, the request information 1 may include the information about the sensing service. The second network device may determine, based on the information about the sensing service, whether to support handing over the sensing service from the first network device to the second network device.

For example, the information about the sensing service includes the identification information of the sensing service. When determining, based on the identification information of the sensing service, that the sensing service corresponding to the identification information is a sensing service supported by the second network device, the second network device determines to support continuous execution of the sensing service, and further can determine that handing over the sensing service from the first network device to the second network device can be supported.

For example, the information about the sensing service includes the context information of the sensing service, and the second network device determines a specific requirement or parameter (for example, the sensing period, the sensing result requirement, or the sensing content) of the sensing service based on the context information of the sensing service. When determining that a sensing capability of the second network device can match the sensing service, the second network device determines to support continuous execution of the sensing service, and further can determine that handing over the sensing service from the first network device to the second network device can be supported.

When the second network device determines, based on the information about the sensing service, to support handing over the sensing service from the first network device to the second network device, the response information 1 indicates that handing over the sensing service from the first network device to the second network device is supported. When the second network device determines, based on the information about the sensing service, that handing over the sensing service from the first network device to the second network device cannot be supported, the response information 1 indicates that handing over the sensing service from the first network device to the second network device is not supported.

In conclusion, the first network device may send (indirectly or directly, which is not limited) the information about the sensing service between the terminal device and the first network device to the second network device, and the second network device may obtain, through information exchange with the first network device, the information about the sensing service originally performed by the terminal device. When the second network device determines that the sensing service can continue to be supported, the sensing service originally performed by the terminal device can continue to be executed.

In this embodiment of this application, the first network device and the second network device exchange the information about the sensing service originally performed by the terminal device, so that the possibility or the probability that the sensing service originally performed by the terminal device can continue to be executed can be increased. In other words, this application provides an interaction mechanism in which the first network device and the second network device exchange the information about the sensing service originally performed by the terminal device. The interaction mechanism may increase the probability or the possibility that the sensing service originally performed by the terminal device can be continued. For example, after obtaining the information about the sensing service originally performed by the terminal device, the second network device may determine whether to support the sensing service. If the sensing service is supported, the sensing service originally performed by the terminal device can be continued or continue to be executed. Correspondingly, the probability that the sensing service originally performed by the terminal device can be continued is increased, thereby supporting continuous execution of the sensing service originally performed by the terminal device.

In a possible implementation, the second network device may determine the response information 1 based on the sensing capability of the second network device for the sensing service. In other words, the response information 1 is related to the sensing capability of the second network device for the sensing service.

For example, the second network device may obtain the identification information and/or the context information of the sensing service based on the information about the sensing service indicated by the request information 1, and determine, based on the sensing capability of the second network device, whether to support the sensing service. For example, the first network device serves as a sending entity of a sensing signal. If the second network device also has a sensing capability and can serve as the sending entity of the sensing signal through determining by the second network device, the second network device may determine that the sensing service can continue to be supported.

Specifically, the second network device may determine, based on the sensing capability of the second network device for the sensing service, whether continuous execution of the sensing service can be supported, to prevent the second network device from sending an incorrect indication to the first network device, for example, prevent the second network device from indicating, when the second network device cannot perform the sensing service after the sensing service is handed over from the first network device to the second network device, to the first network device that the second network device supports continuous execution of the sensing service. Otherwise, the sensing service originally performed by the terminal device would be interrupted. In this way, according to the foregoing solution, in this embodiment of this application, continuous execution of the sensing service originally performed by the terminal device can be better supported.

FIG. 5 is mainly described by using an example in which the first network device indicates, to the second network device, the information about the sensing service originally performed by the terminal device. For related content about how the terminal device is handed over from the first network device to the second network device, refer to descriptions in an existing standard.

The following further describes the method shown in FIG. 5 with reference to FIG. 6 to FIG. 8.

FIG. 6 is a schematic interaction flowchart of another communication method according to an embodiment of this application. The method shown in FIG. 6 may be performed by a first network device, a mobility management network element (for example, an AMF), and a second network device, or may be performed by a module and/or a component (for example, a chip or an integrated circuit) that are/is installed in the first network device, the mobility management network element, and the second network device and that have/has a corresponding function. The following uses the first network device, the AMF, and the second network device as an example for description. As shown in FIG. 6, the method includes the following steps.

S601: The first network device sends request information 1 to the AMF.

Correspondingly, the AMF receives the request information 1.

For descriptions of the request information 1, refer to the descriptions in S501. Details are not described again.

S602: The AMF sends the request information 1 to the second network device.

Correspondingly, the second network device receives the request information 1.

S603: The second network device sends response information 1 to the AMF.

Correspondingly, the AMF receives the response information 1.

For descriptions of a manner of information exchange between the second network device and the AMF, refer to an existing standard. Details are not described.

For descriptions of the response information 1, refer to the descriptions in S502. Details are not described again.

S604: The AMF sends the response information 1 to the first network device.

Correspondingly, the first network device receives the response information 1.

For a process of information exchange between the first network device, the second network device, and the AMF, refer to descriptions in an existing standard. Details are not described.

In the solution shown in FIG. 6, the first network device may interact with the second network device via the AMF. For example, when there is no communication interface between the first network device and the second network device, and the first network device may send the request information 1 to the AMF, the AMF forwards the request information 1 to the second network device. In this way, the first network device may complete information exchange with the second network device via the AMF, thereby supporting continuous execution of a sensing service originally performed by a terminal device.

In the foregoing solution, the AMF assists the first network device and the second network device in completing exchange of the request information 1, and the second network device can obtain, via the AMF, information about the sensing service originally performed by the terminal device. When the second network device determines that the sensing service can continue to be supported, the sensing service originally performed by the terminal device can continue to be executed.

In this embodiment of this application, the first network device and the second network device exchange the information about the sensing service originally performed by the terminal device, so that a possibility or a probability that the sensing service originally performed by the terminal device can continue to be executed can be increased. In other words, this application provides an interaction mechanism in which the first network device and the second network device exchange the information about the sensing service originally performed by the terminal device. The interaction mechanism may increase the probability or the possibility that the sensing service originally performed by the terminal device can be continued. For example, after obtaining the information about the sensing service originally performed by the terminal device, the second network device may determine whether to support the sensing service. If the sensing service is supported, the sensing service originally performed by the terminal device can be continued or continue to be executed. Correspondingly, the probability that the sensing service originally performed by the terminal device can be continued is increased, thereby supporting continuous execution of the sensing service originally performed by the terminal device.

Content shown in FIG. 5 and FIG. 6 is described by using an example in which the first network device and the second network device exchange the information about the sensing service originally performed by the terminal device. When the second network device supports continuous execution of the sensing service, the second network device may further interact with the AMF, to complete switching of a transmission path. For example, the AMF releases a communication connection between the terminal device and the first network device, and establishes a communication connection between the terminal device and the second network device. For how to establish the communication connection between the terminal device and the second network device, refer to descriptions in an existing standard. Details are not described.

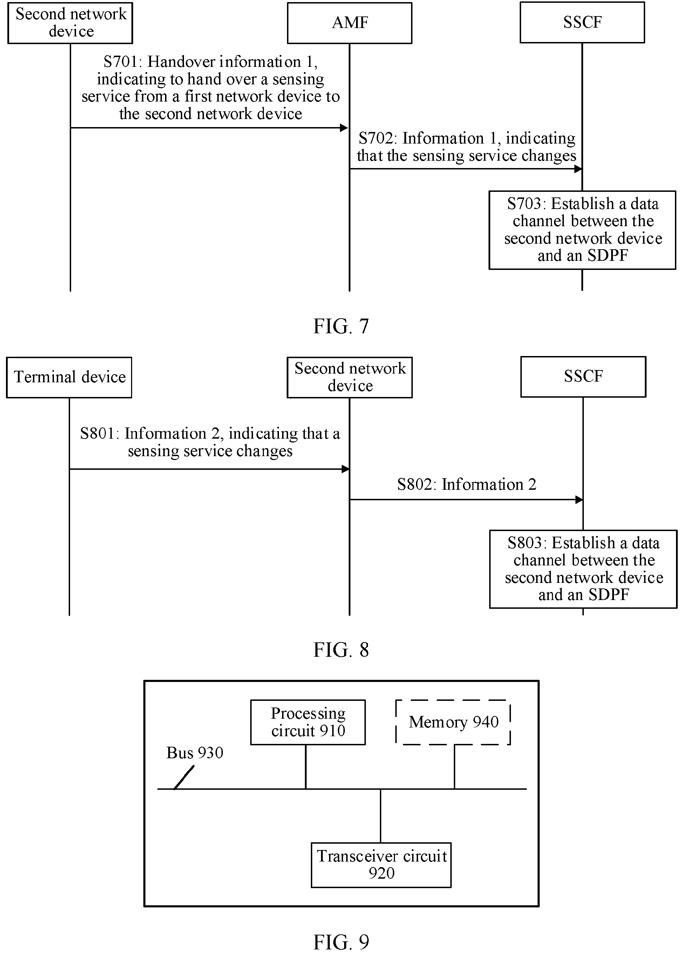

The following describes, with reference to FIG. 7 and FIG. 8, a process of establishing a data channel between the second network device and a SDPF.

FIG. 7 is a schematic interaction flowchart of still another communication method according to an embodiment of this application. The method shown in FIG. 7 may be performed by a second network device, a mobility management network element (for example, an AMF), and an SSCF, or may be performed by a module and/or a component (for example, a chip or an integrated circuit) that are/is installed in the second network device, the mobility management network element, and the SSCF and that have/has a corresponding function. This is not limited. The following uses the second network device, the AMF, and the SSCF as an example for description. As shown in FIG. 7, the method includes the following steps.

S701: The second network device sends handover information 1 to the AMF.

Correspondingly, the AMF receives the handover information 1.

The handover information 1 can indicate to hand over a sensing service from a first network device to the second network device.

When determining that continuous execution of the sensing service can be supported, the second network device may indicate, to the AMF, to hand over the sensing service from the first network device to the second network device, and the AMF may complete the handover of the sensing service based on the indication, thereby supporting continuous execution of the sensing service originally performed by a terminal device.

In a possible implementation, the handover information 1 includes at least one of the following:
information about the sensing service,
identification information of the first network device,
identification information of the second network device, or
information indicating that the sensing service can be continued.

For example, the handover information 1 includes the information about the sensing service. When the second network device sends the information about the sensing service to the AMF, the AMF may determine, based on the information about the sensing service, that the second network device supports continuous execution of the sensing service, and further determine that the sensing service needs to be handed over from the first network device to the second network device.

For another example, the handover information 1 includes the identification information of the first network device. When the second network device sends the identification information of the first network device to the AMF, the AMF may determine a sensing service corresponding to an identifier of the first network device based on an association (which may be preconfigured in the AMF) between the identification information of the first network device and the sensing service, determine that the sensing service can continue to be supported by the second network device, and further determine that the sensing service needs to be handed over from the first network device to the second network device.

For example, the handover information 1 includes the identification information of the second network device. When the second network device sends the identification information of the second network device to the AMF, the AMF may determine a sensing service corresponding to an identifier of the second network device based on an association (which may be preconfigured in the AMF) between the identification information of the second network device and the sensing service, determine that the second network device supports continuous execution of the sensing service, and further determine that the sensing service needs to be handed over from the first network device to the second network device. For details, refer to Table 2. Content shown in Table 2 is merely used as an example, and is not used as a final limitation.

**Table 2**

| Identifier of the second network device | Identifier of the first network device | Identifier of the sensing service |
|---|---|---|
| Identifier 11 | Identifier 21 | Identifier 31 |
| Identifier 12 | Identifier 22 | Identifier 32 |

As shown in Table 2:
- The identifier of the second network device is the identifier 11, which is associated with the identifier 21 of the first network device and the identifier 31 of the sensing service; or
- the identifier of the second network device is the identifier 12, which is associated with the identifier 22 of the first network device and the identifier 32 of the sensing service.

According to the foregoing association relationship, when the second network device sends the identification information of the second network device to the AMF, the AMF may determine a corresponding identifier of the first network device and a corresponding identifier of the sensing service based on the identification information of the second network device and the association relationship shown in Table 2, determine, based on the association relationship, that the second network device supports continuous execution of the sensing service, and further determine that the sensing service needs to be handed over from the first network device to the second network device.

For another example, the handover information 1 includes the information indicating that the sensing service can be continued. When the second network device sends, to the AMF, the information indicating that the sensing service can continue to be executed by the second network device, the AMF may determine, based on the information, that the second network device supports continuous execution of the sensing service, and further determine that the sensing service needs to be handed over from the first network device to the second network device.

In conclusion, the AMF may determine, based on the handover information 1, that the sensing service originally performed by the terminal device needs to be handed over from the first network device to the second network device. In other words, the AMF may determine, based on the handover information 1, that the sensing service originally performed by the terminal device changes, for example, a sensing entity of the sensing service changes.

It should be noted that the handover information 1 is merely used as an example of information, and may be referred to by another information name, including but not limited to: path switch request (PATH SWITCH REQUEST) information, handover notify (HANDOVER NOTIFY) information, and the like. For descriptions of the two pieces of information, refer to descriptions in an existing standard. Details are not described.

S702: The AMF sends information 1 (which may be, for example, first information) to the SSCF.

Correspondingly, the SSCF receives the information 1. The information 1 can indicate that the sensing service changes.

When determining, based on the handover information 1, that the sensing service is handed over from the first network device to the second network device, the AMF may send, to the SSCF, the information 1 indicating that the sensing service changes. The SSCF may determine, based on the information 1, that the sensing service changes, for example, the sensing service is handed over from the first network device to the second network device, or the sensing entity of the sensing service changes.

After obtaining the first information, the SSCF may determine, based on the information 1, that the sensing service is handed over, to be specific, the sensing service is handed over from the first network device to another network device. The SSCF determines that a data transmission channel between the first network device and an SDPF needs to be released, and a data transmission channel between the second network device and the SDPF needs to be established, thereby supporting continuous execution of the sensing service originally performed by the terminal device.

In a possible implementation, the information 1 may include at least one of the following:
information indicating that the sensing entity of the sensing service changes, or information indicating that the sensing service can be continued.

For example, the information 1 includes the information indicating that the sensing entity of the sensing service changes. The SSCF may determine that a data channel between the SDPF and a network device needs to be switched. For example, the data channel between the first network device and the SDPF needs to be released, and the data channel between the second network device and the SDPF needs to be established.

For example, the information 1 includes the information indicating that the sensing service can be continued. When the AMF sends, to the SSCF, the information indicating that the sensing service can be continued, the SSCF may determine, based on the information, that the sensing entity of the sensing service changes, for example, changes from the first network device to the second network device. The SSCF determines that the data channel between the SDPF and the network device needs to be switched. For example, the data channel between the first network device and the SDPF needs to be released, and the data channel between the second network device and the SDPF needs to be established.

In a possible implementation, the information 1 may further include the identification information of the second network device, and the identification information of the second network device can indicate a new sensing entity of the sensing service. When the information 1 does not include the identification information of the second network device, an association between the information 1 and the identification information of the second network device may be preconfigured (refer to Table 2). In this way, the SSCF may determine that the data channel between the second network device and the SDPF needs to be established.

In a possible implementation, the information 1 may further include the identification information of the first network device, and the identification information of the first network device can indicate a source sensing entity of the sensing service. When the information 1 does not include the identification information of the first network device, an association between the information 1 and the identification information of the first network device may be preconfigured (refer to Table 2). In this way, the SSCF may determine that the data channel between the first network device and the SDPF needs to be released.

S703: The SSCF establishes the data channel between the second network device and the SDPF.

For descriptions about how the SSCF establishes the data channel between the second network device and the SDPF, refer to an existing standard. Details are not described.

The data channel between the second network device and the SDPF may be a DCP, or may be another transmission channel. This is not limited.

According to the foregoing technical solution, in this embodiment of this application, the SSCF may be supported to establish the data channel between the second network device and the SDPF, thereby supporting continuous execution of the sensing service originally performed by the terminal device. For example, the SDPF can obtain, from the second network device, sensing data and other similar data generated by the sensing service originally performed by the terminal device.

The method shown in FIG. 7 is described by using an example in which the second network device sends, to the AMF, the handover information 1 indicating to hand over the sensing service from the first network device to the second network device. The handover information 1 may be further used to request to perform switching of the terminal device from a first path to a second path. The first path is a transmission path between the terminal device and the first network device, and the second path is a transmission path between the terminal device and the second network device. For how to implement communication path switching, refer to descriptions in an existing standard. Details are not described.

It should be noted that, when the handover information 1 is further used to request to perform switching of the terminal device from the first path to the second path, the handover information 1 may further include information or a parameter that indicates path switching. For the information or the parameter, refer to descriptions in an existing standard. Details are not described.

It should be further noted that FIG. 7 is described by using an example in which the AMF sends, to the SSCF, the information indicating that the sensing service changes. The following describes, with reference to FIG. 8, a scenario in which the terminal device sends, to the SSCF, the information indicating that the sensing service changes.

FIG. 8 is a schematic interaction flowchart of yet another communication method according to an embodiment of this application. The method shown in FIG. 8 may be performed by a terminal device, a second network device, and an SSCF, or may be performed by a module and/or a component (for example, a chip or an integrated circuit) that are/is installed in the terminal device, the second network device, and the SSCF and that have/has a corresponding function. This is not limited. The following uses the terminal device, the second network device, and the SSCF as an example for description. As shown in FIG. 8, the method includes the following steps.

S801: The terminal device sends information 2 (which may also be first information) to the second network device.

Correspondingly, the second network device receives the information 2.

The information 2 indicates that a sensing service changes. For descriptions of the information 2, refer to the foregoing descriptions of the information 1.

After the terminal device is handed over from a first network device to the second network device, the terminal device may send the information 2 to the second network device.

S802: The second network device sends the information 2 to the SSCF.

Correspondingly, the SSCF receives the information 2.

After determining, based on the information 2, that the sensing service changes, the SSCF may perform adaptive adjustment on the sensing service. For example, the SSCF may adjust a transmission channel for sensing data of the sensing service, thereby supporting continuous execution of the sensing service originally performed by the terminal device.

S803: The SSCF establishes a data channel between the second network device and an SDPF.

For descriptions of S803, refer to the descriptions of S703. Details are not described again.

According to the foregoing technical solution, in this embodiment of this application, the SSCF may be supported to establish the data channel between the second network device and the SDPF, thereby supporting continuous execution of the sensing service originally performed by the terminal device. For example, the SDPF can obtain, from the second network device, the sensing data and other similar data generated by the sensing service originally performed by the terminal device.

In embodiments of this application, the foregoing method embodiments are described by using an example in which the first network device and the second network device exchange information about the sensing service originally performed by the terminal device and the SSCF establishes the data channel between the second network device and the SDPF. After the terminal device is handed over from the first network device to the second network device, and performs, jointly with the second network device, the sensing service originally performed by the terminal device, the terminal device may send the sensing data corresponding to the sensing service to the second network device, the second network device may send the sensing data corresponding to the sensing service through the foregoing data channel, and the SDPF may receive and process the sensing data. For descriptions about how the second network device performs transmission of the sensing data, refer to descriptions in an existing standard. Details are not described.

In conclusion, through establishment, the first network device and the second network device exchange the information about the sensing service originally performed by the terminal device, so that the second network device may obtain the information about the sensing service originally performed by the terminal device. Based on this information exchange mechanism, in this embodiment of this application, the probability that the sensing service originally performed by the terminal device can be continued may be increased. For example, when the second network device determines that the sensing service can continue to be supported, the sensing service originally performed by the terminal device can continue to be executed.

In embodiments of this application, all information names in the foregoing method embodiments are merely used as examples. When functions or purposes of information are the same or similar, other information names may be used for replacement.

The following describes apparatus embodiments corresponding to the method embodiments of this application. The following briefly describes only apparatuses. For specific implementation steps and details of the solutions, refer to the foregoing method embodiments.

To implement functions in the methods provided in this application, a terminal device, a first network device, a second network device, a mobility management network element, and an SSCF each may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

FIG. 9 is a block diagram of a communication apparatus according to an embodiment of this application. The communication apparatus includes a processor 910 and a communication interface 920. The processor 910 and the communication interface 920 may be connected to each other through a bus 930. The communication apparatus may be a terminal device, a first network device, a second network device, an SSCF, or a mobility management network element.

Optionally, the communication apparatus may further include a memory 940. The memory 940 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 940 is configured to store related instructions and data. In some embodiments, the memory 940 may be a cache (cache) or a register (register). In some embodiments, the memory 940 may be integrated with the processor 910.

The processor 910 may be one or more central processing units (central processing units, CPUs). When the processor 910 is one CPU, the CPU may be a single-core CPU, or may be a multi-core CPU.

The processor 910 may be a signal processor, a chip, or another integrated circuit that can implement the methods in this application, or a part of a circuit that is in the foregoing processor, chip, or integrated circuit and that is configured to perform a processing function. In addition, the communication interface 920 may alternatively be an input/output interface. The input/output interface is configured to input or output a signal or data, or may be an input/output circuit.

When the communication apparatus is the terminal device, for example, the processor 910 is configured to perform the following operations: determining indication information; sending the indication information; and the like.

When the communication apparatus is the first network device, for example, the processor 910 is configured to perform the following operations: sending request information 1; receiving response information 1; and the like.

When the communication apparatus is the second network device, for example, the processor 910 is configured to perform the following operations: receiving request information 1; sending response information 1; and the like.

When the communication apparatus is the mobility management network element, for example, the processor 910 is configured to perform the following operations: receiving request information 1; sending the request information 1; receiving response information 1; sending the response information 1; and the like.

When the communication apparatus is the SSCF, for example, the processor 910 is configured to perform the following operations: receiving information 1; establishing a data channel between the second network device and an SDPF; and the like.

The foregoing content is merely used as an example for description. When the communication apparatus is the terminal device, the first network device, the second network device, the SSCF, or the mobility management network element, the communication apparatus is responsible for performing the methods or steps related to the terminal device, the first network device, the second network device, the SSCF, or the mobility management network element in the foregoing method embodiments.

When the communication apparatus is the terminal device, the first network device, the second network device, the SSCF, or the mobility management network element, the communication interface 920 may also be referred to as a transceiver. The foregoing descriptions are merely examples for description. For specific content, refer to the content shown in the method embodiments. For implementation of each operation in FIG. 9, refer to corresponding descriptions in the method embodiments shown in FIG. 5 to FIG. 8.

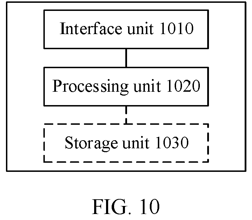

FIG. 10 is a block diagram of another communication apparatus according to an embodiment of this application. The communication apparatus may be a terminal device, a first network device, a second network device, an SSCF, or a mobility management network element, or may be a chip or a module in the terminal device, the first network device, the second network device, the SSCF, or the mobility management network element, and is configured to implement the methods in the foregoing embodiments. The communication apparatus includes an interface unit 1010 and a processing unit 1020. The following describes the interface unit 1010 and the processing unit 1020 by using examples.

The interface unit 1010 may include a sending unit and a receiving unit. The sending unit is configured to perform a sending action of the communication apparatus. The receiving unit is configured to perform a receiving action of the communication apparatus. For ease of description, in this embodiment of this application, the sending unit and the receiving unit are combined into one transceiver unit. Unified descriptions are provided herein, and details are not described below again.

When the communication apparatus is the terminal device, for example, the interface unit 1010 is configured to send indication information. The processing unit 1020 is configured to perform content of steps such as processing and coordination related to the terminal device. For example, the processing unit 1020 is configured to determine the indication information.

When the communication apparatus is the first network device, for example, the interface unit 1010 is configured to perform the following operations: sending request information 1; receiving response information 1; and the like. The processing unit 1020 is configured to perform content of steps such as processing and coordination related to the first network device. For example, the processing unit 1020 is configured to determine the request information 1.

When the communication apparatus is the second network device, for example, the interface unit 1010 is configured to perform the following operations: receiving request information 1; sending response information 1; and the like. The processing unit 1020 is configured to perform content of steps such as processing and coordination related to the second network device. For example, the processing unit 1020 is configured to determine the response information 1.

When the communication apparatus is the mobility management network element, for example, the interface unit 1010 is configured to perform the following operations: receiving request information 1; sending the request information 1; receiving response information 1; sending the response information 1; and the like. The processing unit 1020 is configured to perform content of steps such as processing and coordination related to the mobility management network element. For example, the processing unit 1020 is configured to determine information 1.

When the communication apparatus is the SSCF, for example, the interface unit 1010 is configured to perform the following operation: receiving the information 1. The processing unit 1020 is configured to establish a data channel between the second network device and an SDPF, and the like.

The foregoing content is merely used as an example for description. When the communication apparatus is the terminal device, the first network device, the second network device, the SSCF, or the mobility management network element, the communication apparatus is responsible for performing the methods or steps related to the terminal device, the first network device, the second network device, the SSCF, or the mobility management network element in the foregoing method embodiments.

Optionally, the communication apparatus further includes a storage unit 1030. The storage unit 1030 is configured to store a program or code used to perform the foregoing method.

The apparatus embodiments shown in FIG. 9 and FIG. 10 are used to implement the content described in FIG. 5 to FIG. 8. For specific execution steps and methods of the apparatuses shown in FIG. 9 and FIG. 10, refer to the content described in the foregoing method embodiments.

This application further provides a chip, including a processor, configured to invoke instructions from a memory and run the instructions stored in the memory, to cause a communication device on which the chip is installed to perform the methods in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product is run on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiment are implemented.

This application further provides a circuit system, configured to perform a method and a function that are related to the network device or the terminal device in any one of the foregoing embodiments. In some embodiments, the circuit system includes a processor and a memory. The memory is configured to store related instructions. When the processor invokes the instructions, the circuit system is caused to implement the method and the function of the network device or the terminal device in any one of the foregoing embodiments. In some embodiments, the memory may alternatively be configured to store related data. The memory may be a cache (cache) or a register (register). In some embodiments, the memory may be integrated with the processor. In some embodiments, the circuit system is a chip.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed systems, apparatuses, and methods may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the technical solutions in embodiments.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
sending request information, wherein the request information is used to request a handover of a terminal device from a first network device to a second network device, and the request information further indicates information about a sensing service between the terminal device and the first network device; and
receiving response information, wherein the response information corresponds to the request information.

2. The method according to claim 1, wherein the information about the sensing service comprises at least one of the following:
identification information or context information.

3. The method according to claim 2, wherein the context information comprises at least one of the following:
sensing content, a sensing period, or a sensing result requirement.

4. The method according to any one of claims 1 to 3, wherein the sending the request information comprises:
sending the request information to the second network device; or
sending the request information to a mobility management network element.

5. A communication method, comprising:
receiving request information, wherein the request information is used to request a handover of a terminal device from a first network device to a second network device, and the request information further indicates information about a sensing service between the terminal device and the first network device; and
sending response information in response to the request information.

6. The method according to claim 5, wherein the information about the sensing service comprises at least one of the following:
identification information or context information.

7. The method according to claim 6, wherein the context information comprises at least one of the following:
sensing content, a sensing period, or a sensing result requirement.

8. The method according to any one of claims 5 to 7, wherein the response information indicates whether the sensing service can be continued.

9. The method according to claim 8, wherein the response information is related to a sensing capability of the second network device for the sensing service.

10. The method according to claim 8 or 9, wherein the response information indicates that the sensing service can be continued, and the method further comprises:
sending handover information to a mobility management network element, wherein the handover information indicates to hand over the sensing service from the first network device to the second network device.

11. The method according to claim 10, wherein the handover information comprises at least one of the following:
the information about the sensing service, identification information of the first network device, identification information of the second network device, or information indicating that the sensing service can be continued.

12. The method according to any one of claims 8 to 11, wherein the response information indicates that the sensing service can be continued, and the method further comprises:
sending first information to a sensing service control network element, wherein the first information indicates that the sensing service changes.

13. The method according to claim 12, wherein the first information comprises at least one of the following:
information indicating that a sensing entity of the sensing service changes or information indicating whether the sensing service can be continued.

14. A communication method, comprising:
receiving request information from a first network device, wherein the request information is used to request a handover of a terminal device from the first network device to a second network device, and the request information further indicates information about a sensing service performed between the terminal device and the first network device;
sending the request information to the second network device;
receiving response information from the second network device, wherein the response information corresponds to the request information; and
sending the response information to the first network device.

15. The method according to claim 14, wherein the information about the sensing service comprises at least one of the following:
identification information or context information.

16. The method according to claim 15, wherein the context information comprises at least one of the following:
sensing content, a sensing period, or a sensing result requirement.

17. The method according to any one of claims 14 to 16, further comprising:
receiving handover information from the second network device, wherein the handover information indicates to hand over the sensing service from the first network device to the second network device.

18. The method according to claim 17, wherein the handover information comprises at least one of the following:
the information about the sensing service, identification information of the first network device, identification information of the second network device, or information indicating that the sensing service can be continued.

19. The method according to any one of claims 14 to 18, further comprising:
sending first information to a sensing service control network element, wherein the first information indicates that the sensing service changes.

20. The method according to claim 19, wherein the first information comprises at least one of the following:
information indicating that a sensing entity of the sensing service changes or information indicating whether the sensing service can be continued.

21. The method according to any one of claims 14 to 20, wherein the response information indicates whether the sensing service can be continued.

22. A communication apparatus, comprising a processor, wherein the processor is configured to cause, by executing a computer program or instructions or by using a logic circuit,
the communication apparatus to perform the method according to any one of claims 1 to 4,
the communication apparatus to perform the method according to any one of claims 5 to 13, or
the communication apparatus to perform the method according to any one of claims 14 to 21.

23. A communication apparatus, comprising a logic circuit and an input/output interface, wherein the input/output interface is configured to input and/or output a signal; and
the logic circuit is configured to perform the method according to any one of claims 1 to 4,
the logic circuit is configured to perform the method according to any one of claims 5 to 13, or
the logic circuit is configured to perform the method according to any one of claims 14 to 21.

24. A computer-readable storage medium, wherein the computer-readable storage medium stores a computer program or instructions, and when the computer program or the instructions are run on a computer,
the method according to any one of claims 1 to 4 is performed,
the method according to any one of claims 5 to 13 is performed, or
the method according to any one of claims 14 to 21 is performed.

25. A computer program product, comprising instructions, wherein when the instructions are run on a computer,
the method according to any one of claims 1 to 4 is performed,
the method according to any one of claims 5 to 13 is performed, or
the method according to any one of claims 14 to 21 is performed.

26. A chip system, wherein the chip system comprises a processor, a memory, and an input/output port, the memory is configured to store a computer program, and the processor is configured to execute the computer program stored in the memory,
to cause the processor to perform the method according to any one of claims 1 to 4,
to cause the processor to perform the method according to any one of claims 5 to 13, or
to cause the processor to perform the method according to any one of claims 14 to 21.
